# EUROPÄISCHE PATENTANMELDUNG

(11) **EP 3 176 656 A1**
(43) Veröffentlichungstag der Anmeldung: **07.06.2017**
(21) Anmeldenummer: 15197363.3
(22) Anmeldetag: 01.12.2015
(51) Int. Cl.: G05B 19/05, G06F 9/445, G05B 19/042

(54) **VERFAHREN ZUM BETREIBEN EINER AUTOMATISIERUNGSEINRICHTUNG SOWIE AUTOMATISIERUNGSEINRICHTUNG**

(71) Anmelder: Siemens Aktiengesellschaft, 80333 München (DE)
(72) Erfinder: Dittel, Vladimir, 76187 Karlsruhe (DE); Uhlig, Rainer, 75249 Kieselbronn (DE)

(57) **Zusammenfassung**

Es wird ein Verfahren zum Betreiben einer Automatisierungseinrichtung (1) vorgeschlagen, mittels welchem eine Operator-Station (11, 20) für ein Laden eines geänderten Funktionsbausteins in ein Automatisierungsgerät (2, 16) während der Prozesssteuerung im Hinblick auf die aktuelle Darstellung eines Prozessbildes vorbereitet ist. Das OS-Programm (21) der Operator-Station (11, 20) ist dadurch in der Lage, sowohl vor als auch nach dem Laden eines geänderten Funktionsbausteins oder eines mit diesem Funktionsbaustein versehenen Steuerprogramms in das Automatisierungsgerät (2, 16) ein aktuelles Prozessbild anzuzeigen.

## Beschreibung

Die Erfindung betrifft ein Verfahren zum Betreiben einer Automatisierungseinrichtung gemäß dem Oberbegriff des Anspruchs 1. Darüber hinaus betrifft die Erfindung eine Automatisierungseinrichtung gemäß dem Oberbegriff des Anspruchs 2.

Ein derartiges Verfahren sowie eine derartige Automatisierungseinrichtung sind aus dem Siemens-Katalog ST PCS 7, Ausgabe 2014/15 bekannt. Eine Operator-Station ist über geeignete Busverbindungen mit mindestens einem Automatisierungsgerät bzw. einer speicherprogrammierbaren Steuerung (PLC) verbunden, wobei dieses Automatisierungsgerät mit einem geeigneten Anwender- bzw. Steuerprogramm zur Steuerung eines technischen Prozesses versehen ist. Dabei werden unter dem Begriff "technischer Prozess" sowohl verfahrenstechnische Prozesse als auch Fertigungsabläufe sowie Steuerungen von Maschinen und/oder Anlagen verstanden. Die Operator-Station weist ein OS-Programm auf, welches zum Bedienen und Beobachten eines derartigen Prozesses vorgesehen ist, wobei dazu ein mehrere Bildbausteine aufweisendes Prozessbild auf einer Anzeigeeinheit der Operator-Station dargestellt wird. Beispielsweise kann der Wert eines Prozessparameters in Form einer Temperatur geändert werden, indem ein Anwender bzw. Operator einen dargestellten grafischen Bildbaustein bzw. ein dargestelltes grafisches Bedienobjekt in Form eines Temperaturschiebers mit einem Bedienelement in Form einer Maus anwählt und diesen Schieber von einer aktuellen Position, welche eine aktuelle Soll-Temperatur repräsentiert, in eine andere Position verschiebt, die eine neue gewünschte Soll-Temperatur darstellt bzw. verkörpert. Aufgrund dieser neu eingestellten Temperatur wird z. B. die Energiezufuhr eines Heizkessels so lange erhöht, bis sich die neue gewünschte Soll-Temperatur im Heizkessel einstellt.

Zur Erstellung des Anwender- bzw. Steuerprogramms sowie zur Erstellung des OS-Programms weist die Automatisierungseinrichtung ein mit der OS-Station und dem Automatisierungsgerät verbundenes Engineering-System auf, welches insbesondere auch geeignet ist zum Konfigurieren von Hard- und/oder Softwarekomponenten, zum Projektieren von Kommunikationsnetzwerken, zum Projektieren von kontinuierlichen und sequenziellen Prozessabläufen sowie ferner zum Design von Bedien- und Beobachtungsstrategien.

Mittels eines auf diesem Engineering-System ablauffähigen grafischen Editors erstellt ein Anwender aus vorgefertigten Funktionsbausteinen nach Maßgabe einer zu lösenden Automatisierungsaufgabe eine Automatisierungslösung (ein Anwender- bzw. Steuerprogramm). Dazu wählt der Anwender die Funktionsbausteine, z. B. einen Regler- oder -Zähler-Baustein aus einem verfügbaren Bausteinvorrat aus, platziert die Bausteine z. B. per Drag&Drop in einem Funktionsplan (z. B. CFC-Plan) und verschaltet diese per Mausklick miteinander, wobei für eine Vielzahl dieser Funktionsbausteine automatisch diesen Funktionsbausteinen zugeordnete Datenbausteine erzeugt werden. Unter dem Begriff "verschalten" wird verstanden, dass z. B. für die Kommunikation zwischen den Bausteinen Werte von einem Ausgang zu einem oder mehreren Eingängen übertragen werden. Nachdem der Anwender alle Funktionen im Funktionsplan erstellt hat, übersetzt das Engineering-System das Steuerprogramm in eine mittels des Automatisierungsgerätes verarbeitbare Form und lädt dieses übersetzte Steuerprogramm in das Automatisierungsgerät. Dort wird im Rahmen der Prozesssteuerung (RUN-Betrieb) das Steuerprogramm zur Lösung der Automatisierungsaufgabe verarbeitet.

Mittels des grafischen Editors oder eines weiteren grafischen Editors des Engineering-Systems wird ferner das OS-Programm erstellt, übersetzt und in die OS-Station geladen, wobei für eine Vielzahl der Funktionsbausteine des Steuerprogramms den Funktionsbausteinen zugeordnete Bildbausteine für ein Prozessbild vorgesehen sind. Die Anzeige einiger Bildbausteine wird während der Prozesssteuerung häufig aktualisiert, damit der Anwender z. B. den aktuellen Füllstand eines Tanks auf einer Anzeigeeinheit der OS-Station ablesen kann. Dazu liest das OS-Programm die aktuellen Füllstands-Daten (Variablen) aus dem Datenbaustein des Funktionsbausteins des Steuerprogramms aus, welcher dem dargestellten Bildbaustein zugeordnet ist.

Es kann nun vorkommen, dass der Anwender eine so genannte aus dem genannten Siemens-Katalog bekannte "Type Change in Run-Funktionalität" nutzt, um während der Prozesssteuerung bzw. des RUN-Betriebs des Automatisierungsgerätes einen geänderten Funktionsbaustein des Steuerprogramms in das Automatisierungsgerät zu laden und dort zu verarbeiten. Dabei kommt es häufig vor, dass das ursprünglich geladene OS-Programm beispielsweise nicht mehr die aktuellen Füllstands-Daten des Bildbausteins anzeigen kann, weil das ursprünglich in die OS-Station geladene OS-Programm auf den bereits gelöschten Datenbaustein zugreift und dadurch einen Fehlzugriff ausführt; denn für den Fall, dass der Anwender an einem Funktionsbaustein des Steuerprogramms eine Änderung vornimmt, z. B. in der Art und Weise, dass an diesem Funktionsbaustein ein neuer Eingang oder Ausgang hinzugefügt wird, wird für diesen Funktionsbaustein ein neuer Datenbaustein erzeugt und zugeordnet und ferner der alte Datenbaustein gelöscht.

Der Erfindung liegt daher die Aufgabe zugrunde, ein Verfahren zum Betreiben einer Automatisierungseinrichtung gemäß dem Oberbegriff des Anspruchs 1 anzugeben, mittels welchem eine Operator-Station für ein Laden eines geänderten Funktionsbausteins in das Automatisierungsgerät während der Prozesssteuerung im Hinblick auf die aktuelle Darstellung eines Prozessbildes vorbereitet ist. Darüber hinaus ist eine Automatisierungseinrichtung gemäß dem Oberbegriff des Anspruchs 2 zu schaffen, welche für eine Durchführung des Verfahrens geeignet ist.

Diese Aufgabe wird im Hinblick auf das Verfahren durch die im kennzeichenenden Teil des Anspruchs 1 angegebenen, bezüglich der Automatisierungseinrichtung durch die im Anspruch 2 angegebenen Maßnahmen gelöst.

Vorteilhaft ist, dass das OS-Programm der Operator-Station in der Lage ist, sowohl vor als auch nach dem Laden eines geänderten Funktionsbausteins oder eines mit diesem Funktionsbaustein versehenen Steuerprogramms in das Automatisierungsgerät ein aktuelles Prozessbild anzuzeigen. Es ist sichergestellt, dass das OS-Programm stets aktuelle Daten aus dem Automatisierungsgerät ausliest und verarbeitet.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form
- Figur 1: Zugriffe auf Datenbausteine eines Automatisierungsgerätes und
- Figur 2: eine Automatisierungseinrichtung.

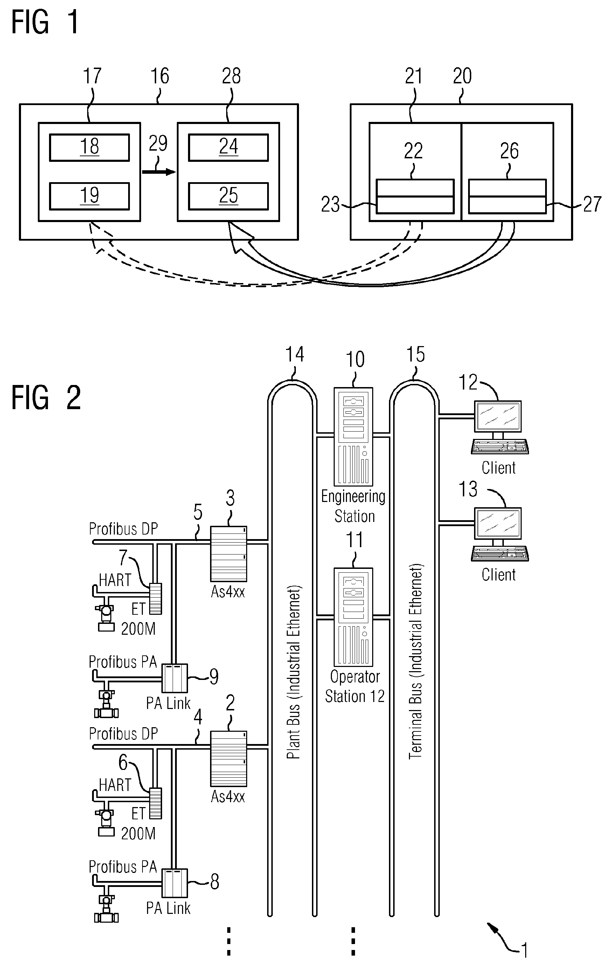

Es wird zunächst auf Figur 2 verwiesen, in welcher Bestandteile einer an sich bekannten Automatisierungseinrichtung 1 dargestellt sind. Die Automatisierungseinrichtung 1 weist Automatisierungsgeräte 2, 3 auf, die jeweils über einen Feldbus 4, 5 mit einer dezentralen Peripherie 6, 7 und einem Buskoppler 8, 9 verbunden sind. Jede dieser dezentralen Peripherien 6, 7 ist mit einer Interface-Baugruppe und mit einer Vielzahl von Prozesseingabe- und Prozessausgabe-Baugruppen versehen, wobei an die jeweiligen Prozesseingabe-Baugruppen Sensoren und an die jeweiligen Prozessausgabe-Baugruppen Aktuatoren angeschlossen sind. Ferner ist die Automatisierungseinrichtung 1 mit einem Engineering-System 10 zur Projektierung dieser Automatisierungseinrichtung 1 und mit einer Operator-Station 11 zur Darstellung eines Prozessbildes und zur Prozessführung versehen, wobei ein Anwender mittels Clients 12, 13 auf die Projektierungs-Software des Engineering-Systems 10 und auf die Bedien- und Beobachtungs-Software bzw. auf die OS-Software der Operator-Station 11 lesend oder schreibend zugreifen kann. Die Operator-Station 11 ermöglicht dem Operator eine komfortable und sichere Prozessführung; er kann bei Bedarf in den Prozessablauf steuernd eingreifen, was bedeutet, dass der Operator den durch die Automatisierungseinrichtung 1 zu steuernden technischen Prozess bedienen und beobachten kann. Über geeignete Netzwerke 14, 15 sind die Clients 12, 13, das Engineering-System 10, die Operator-Station 11 und die Automatisierungsgeräte 2, 3 miteinander verbunden.

Mittels einer grafischen Programmiersprache des Engineering-Systems 10 erstellt ein Anwender ein Steuerprogramm zum Steuern des technischen Prozesses. Dieses Steuerprogramm weist eine Vielzahl von Funktionsbausteinen und diesen Funktionsbausteinen zugehörige Datenbausteine auf, in welchen während der Prozesssteuerung Prozessvariablen hinterlegt werden, auf die die OS-Software bzw. das OS-Programm zur Aktualisierung des Prozessbildes zugreifen kann. Nach der Erstellung des Steuerprogramms übersetzt ein Compiler des Engineering-Systems 11 das Steuerprogramm in eine z. B. für das Automatisierungsgerät 2 verarbeitbare Form, wobei nach dieser Übersetzung das Steuerprogramm schließlich mittels des Engineering-Systems 10 in das Automatisierungsgerät 2 übertragen bzw. geladen wird.

Darüber hinaus erstellt der Anwender mittels der grafischen Programmiersprache oder einer weiteren grafischen Programmiersprache des Engineering-Systems 10 ein OS-Programm für die Operator-Station 11. Das erstellte Programm wird ebenfalls mittels eines Compilers des Engineering-Systems 10 in eine durch die OS-Station 11 verarbeitbare Form übersetzt und mittels des Engineering-Systems 10 in die Operator-Station 11 geladen. Durch das OS-Programm wird das Prozessbild dem Operator zur Prozessbeobachtung sowie zur Prozessbedienung angezeigt bzw. dargestellt. Einige der Bildbausteine des Prozessbildes sind einigen Funktionsbausteinen des Steuerprogramms zugeordnet und stehen mit diesen Funktionsbausteinen in Wirkverbindung, wobei das Engineering-System 10 über entsprechende Zuordnungen die Verbindung zwischen den Funktionsbausteinen des Steuerprogramms und den Bildbausteinen des Prozessbildes herstellt. Beispielsweise steht ein Funktionsbaustein "Drehzahl-Regler" in Wirkverbindung mit einem Bildbaustein "Motor" des Prozessbildes. Das Engineering-System 10, welches für diesen Funktionsbaustein "Drehzahl-Regler" einem diesem Funktionsbaustein zugehörigen Datenbaustein erzeugt hat, hinterlegt für diesen Datenbaustein eine Adresse in der OS-Station 11 bzw. in dem OS-Programm. Während der Prozesssteuerung bzw. im RUN-Betrieb des Automatisierungsgerätes 2 greift das OS-Programm mittels dieser Adresse auf den Datenbaustein lesend zu, um die in diesem Datenbaustein hinterlegte aktuelle Drehzahl eines Motors auszulesen. Das OS-Programm aktualisiert den zugeordneten Bildbaustein "Motor" im Prozessbild und zeigt die aktuelle Drehzahl an.

Eine an sich bekannte "Type Change in Run-Funktion" ermöglicht, dass ein Anwender während der Prozesssteuerung bzw. des RUN-Betriebs des Automatisierungsgerätes einen geänderten Funktionsbaustein oder das mit diesem Funktionsbaustein geänderte Steuerprogramm in das Automatisierungsgerät 2 lädt. Das Automatisierungsgerät unterbricht nicht die Prozesssteuerung, diese geht also nicht in einen Stopp-Zustand sondern bleibt im RUN-Betrieb und verarbeitet das geänderte Steuerprogramm. Für den Fall, dass der Funktionsbaustein "Drehzahl-Regler" geändert wurde, kann das ursprünglich geladene OS-Programm, welches mit dem ursprünglich geladenen Steuerprogramm in Wirkverbindung steht, nicht mehr die aktuelle Drehzahl an dem zugeordneten Bildbaustein anzeigen, weil im Rahmen der Funktionsbaustein-Änderung die Engineering-Station den ursprünglichen Datenbaustein löscht und einen neuen Datenbaustein mit einer neuen Adresse zur Adressierung des neuen Datenbausteins erzeugt. Dies bedeutet, dass nach dem Laden des geänderten Steuerprogramms das OS-Programm weiterhin zum Auslesen der Drehzahl mit der ursprünglichen Adresse auf den bereits gelöschten Datenbaustein zugreift und dadurch einen Fehlzugriff ausführt.

Um einen derartigen Fehlzugriff zu vermeiden und um sicherzustellen, dass die OS-Station stets auf die in dem Automatisierungsgerät hinterlegten aktuellen Variablen zugreifen kann, erzeugt die Engineering-Station für den Fall, dass eine Änderung am Funktionsbaustein des Steuerprogramms vorgenommen wird, eine neue Adresse - im Folgenden als zweite Adresse bezeichnet - für das OS-Programm, welche in die OS-Station geladen wird. Mittels dieser zweiten Adresse greift das OS-Programm während der Prozesssteuerung nur dann auf das Automatisierungsgerät zu, falls das OS-Programm den Zugriff mittels der ursprünglich hinterlegten Adresse - im Folgenden als erste Adresse bezeichnet - als Fehlzugriff erkennt. Dies bedeutet, das vor einer Änderung des Funktionsbaustein das OS-Programm mit der ersten Adresse auf den ursprünglichen Datenbaustein adressiert und nach einer Änderung mit der zweiten Adresse den neuen Datenbaustein adressiert, da im letzten genannten Fall die OS-Station bzw. das OS-Programm erkennt, dass die erste Adresse ungültig ist und mit dieser ein Fehlzugriff bewerkstelligt wird.

Zur näheren Verdeutlichung wird im Folgenden auf Figur 1 verwiesen, in welcher in vereinfachter Form Zugriffe eines OS-Programms auf Datenbausteine eines Automatisierungsgerätes dargestellt sind.

Bezüglich der Zugriffe mittels einer ersten und einer zweiten Adresse wird im Folgenden auf Figur 1 verwiesen, in welcher in vereinfachter Form Zugriffe eines OS-Programms auf Datenbausteine eines Automatisierungsgerätes dargestellt sind. Es wird angenommen, dass ein Automatisierungsgerät 16 ein in dieses geladenes Steuerprogramm 17 verarbeitet, welches zwei zu Funktionsbausteinen zugehörige Datenbausteine 18, 19 aufweist. Eine Operator-Station 20 verarbeitet ein OS-Programm 21, wobei das OS-Programm 21 mit zwei Adressen 22, 23 für einen Zugriff auf die Datenbausteine 18, 19 versehen ist, was in der Figur 1 mittels eines gestrichelten Pfeils dargestellt ist. Ferner wird angenommen, dass ein Anwender an zwei Funktionsbausteinen Änderungen vorgenommen hat, wodurch das Engineering-System die ursprünglich zugehörigen Datenbausteine 18, 19 löscht und zwei neue Datenbausteine 24, 25 sowie zwei neue Adressen 26, 27 erzeugt, die in die OS-Station 20 geladen werden, wobei darüber hinaus angenommen wird, dass die geänderten Funktionsbausteine bzw. das geänderte Steuerprogramm noch nicht in das Automatisierungsgerät 16 geladen sind. Das OS-Programm greift während der Prozesssteuerung weiterhin mittels der (ursprünglich geladenen) Adressen 22, 23 auf das Automatisierungsgerät 16 und somit auf die Datenbausteine 18, 19 bis das OS-Programm 21 einen Fehlzugriff erkennt. Einen Fehlzugriff erkennt das OS-Programm 21 für den Fall, dass die geänderten Funktionsbausteine mit zu diesen Funktionsbausteinen gehörigen Datenbausteine 24, 25 geladen werden bzw. das durch diese Funktionsbausteine geänderte Steuerprogramm 28 in das Automatisierungsgerät geladen wird, was in der Zeichnung mittels eines Pfeils 29 angedeutet ist. In diesem Fall greift das OS-Programm 21 ins "Leere" und führt einen neuen Lesezugriff mit den zwei neuen Adressen 26, 27 aus, wodurch die neuen Datenbausteine 24, 25 zum Auslesen der Daten adressiert werden. Das OS-Programm 21 ist somit mittels der Adressen 22, 23, 26, 27 in der Lage, sowohl vor als auch nach dem Laden der geänderten Funktionsbausteine in das Automatisierungsgerät (16) stets ein aktuelles Prozessbild anzuzeigen.

## Patentansprüche

1. Verfahren zum Betreiben einer Automatisierungseinrichtung, wobei
- mittels einer grafischen Programmiersprache ein Steuerprogramm (16, 17) zum Steuern eines technischen Prozesses erstellt wird, wobei das Steuerprogramm (16) mindestens einen Funktionsbaustein und mindestens einen diesem Funktionsbaustein zugehörigen Datenbaustein (18, 19) aufweist und wobei das Steuerprogramm nach einer Übersetzung in ein Automatisierungsgerät (2, 16) geladen wird,
- mittels einer grafischen Programmiersprache ein OS-Programm (21) für eine Operator-Station (11, 20) erstellt und nach einer Übersetzung in die Operator-Station (11, 20) geladen wird, wobei für das OS-Programm (21) ein den Funktionsbaustein zugeordneter Bildbaustein eines Prozessbildes und eine erste Adresse (22, 23) erzeugt wird, mittels der das OS-Programm (21) während der Prozesssteuerung auf den zugehörigen Datenbaustein (18, 19) im Automatisierungsgerät (2, 16) zugreift,
- für den Fall, dass eine Änderung am Funktionsbaustein des Steuerprogramms (16) vorgenommen wird, der Datenbaustein (18, 19) gelöscht und ein neuer Datenbaustein (24, 25) für diesen Funktionsbaustein erzeugt wird,
**dadurch gekennzeichnet, dass** für den Fall, dass eine Änderung am Funktionsbaustein des Steuerprogramms (16) vorgenommen wird, ferner für das OS-Programm (21) eine zweite Adresse (26, 27) erzeugt wird und in die Operator-Station (11, 21) geladen wird und dass das OS-Programm (21) während der Prozesssteuerung nur dann mittels der zweiten Adresse (26, 27) auf das Automatisierungsgerät (2, 16) zugreift, falls das OS-Programm (21) den Zugriff mittels der ersten Adresse (22, 23) als Fehlzugriff erkennt.

2. Automatisierungseinrichtung,
- mit einer Operator-Station (11) zum Darstellen eines Prozessbildes,
- mit einer Engineering-Station (10), die dazu ausgebildet ist,
- mittels einer grafischen Programmiersprache ein Steuerprogramm (16) zum Steuern eines technischen Prozesses zu erstellen, wobei das Steuerprogramm (16) mindestens einen Funktionsbaustein und mindestens einen diesem Funktionsbaustein zugehörigen Datenbaustein (18, 19) aufweist und wobei das Steuerprogramm (16) nach einer Übersetzung in ein Automatisierungsgerät (2) geladen wird,
- mittels einer grafischen Programmiersprache ein OS-Programm (21) für eine Operator-Station (11, 20) zu erstellen und nach einer Übersetzung in die Operator-Station (11, 20) zu laden, wobei für das OS-Programm (21) ein dem Funktionsbaustein zugeordneter Bildbaustein eines Prozessbildes und eine erste Adresse (22, 23) erzeugt wird, mittels der das OS-Programm (21) während der Prozesssteuerung auf den zugehörigen Datenbaustein (18, 19) im Automatisierungsgerät (2, 16) zugreift,
- für den Fall, dass eine Änderung am Funktionsbaustein des Steuerprogramms (16) vorgenommen wird, den Datenbaustein (18, 19) zu löschen und einen neuen Datenbaustein (24, 25) für diesen Funktionsbaustein zu erzeugen,
**dadurch gekennzeichnet, dass**
die Engineering-Station (10) ferner dazu ausgebildet ist, für den Fall, dass eine Änderung am Funktionsbaustein des Steuerprogramms (16) vorgenommen wird, ferner für das OS-Programm (21) eine zweite Adresse (26, 27) zu erzeugen und in die Operator-Station (11, 16) zu laden und das OS-Programm (21) dazu ausgebildet ist, während der Prozesssteuerung nur dann mittels der zweiten Adresse (26, 27) auf das Automatisierungsgerät (2) zuzugreifen, falls das OS-Programm (21) den Zugriff mittels der ersten Adresse (22, 23) als Fehlzugriff erkennt.
